# EUROPEAN PATENT APPLICATION

(11) **EP 4 813 490 A1**
(43) Date of publication of application: **30.09.2026**
(21) Application number: 24896026.2
(22) Date of filing: 11.10.2024
(51) Int. Cl.: B01D 3/00, B01D 19/00

(54) **DEGASSING DEVICE AND METHOD FOR LIQUID LITHIUM HEXAFLUOROPHOSPHATE**

(30) Priority: 28.11.2023 CN 202311604494
(71) Applicant: Shinghwa Amperex Technology (Dongying) Co., Ltd., Dongying, Shandong 257503 (CN); Shida Shingwa Advanced Material Group Co., Ltd., Dongying, Shandong 257503 (CN)
(72) Inventor: YAN, Zizhen, Shandong 257503 (CN); GUO, Jianjun, Shandong 257503 (CN); LI, Guangke, Shandong 257503 (CN); NIU, Leilei, Shandong 257503 (CN); ZHANG, Ming, Shandong 257503 (CN)
(74) Representative: Meyer-Dulheuer MD Legal Patentanwälte PartG mbB
(86) International application number: PCT/CN2024/124087
(87) International publication number: WO 2025/112932

(57) **Abstract**

The present invention discloses a degassing device and degassing method for liquid lithium hexafluorophosphate. The degassing device includes a scraper evaporator E201, a post-degassing concentration and collection tank V301, a condenser E202, a solvent collection tank V303, and a vacuum pump P103, where the scraper evaporator E201 is connected to a conveying pipeline of a liquid lithium hexafluorophosphate raw material. Under a heating effect and a rotating centrifugal force of the scraper evaporator E201, part of the liquid lithium hexafluorophosphate raw material is vaporized, the vaporized material is conveyed to the condenser E202, and the unvaporized liquid is conveyed to the post-degassing concentration and collection tank V301. An output end of the condenser E202 is connected to the solvent collection tank V303, and a gas phase output end of the solvent collection tank V303 is connected to the vacuum pump P103. According to the present invention, an efficient and excellent degassing effect is achieved, and it is finally ensured that the content of hydrogen chloride in the liquid lithium hexafluorophosphate degassed according to the present application is less than 10 ppm, thereby reliably ensuring performance of the liquid lithium hexafluorophosphate used as a lithium-ion battery electrolyte.

## Description

The present application claims priority to Chinese Patent Application No. 202311604494X, filed with the China National Intellectual Property Administration on November 28, 2023 and entitled "DEGASSING DEVICE AND DEGASSING METHOD FOR LIQUID LITHIUM HEXAFLUOROPHOSPHATE", which is incorporated herein by reference in its entirety.

### TECHNICAL FIELD

The present invention belongs to the field of lithium-ion battery electrolytes, and particularly relates to a degassing device and degassing method for liquid lithium hexafluorophosphate.

### BACKGROUND

In a synthesis method for liquid lithium hexafluorophosphate, liquid lithium hexafluorophosphate is usually obtained by reacting lithium fluoride suspended in carbonate ester with phosphorus pentafluoride/hydrogen chloride gas. As a result, a certain proportion of hydrogen chloride gas is dissolved in the obtained liquid lithium hexafluorophosphate. The hydrogen chloride gas is an impurity in a liquid lithium salt and needs to be removed, thus realizing purification of and impurity removal from the liquid lithium hexafluorophosphate material system. The purified liquid lithium hexafluorophosphate is then applied to a formula of a lithium-ion battery electrolyte to replace solid lithium hexafluorophosphate.

Furthermore, due to the polarization effect of lithium hexafluorophosphate in a solvent, the solubility of gaseous hydrogen chloride in the solvent is increased. Upon testing, it was found that the content of lithium hexafluorophosphate in liquid lithium hexafluorophosphate was 28% to 30%, the content of hydrogen chloride was 5% to 6%, and the remaining components were trace amounts of hydrogen fluoride and solvent. When the liquid lithium hexafluorophosphate is used as a lithium-ion battery electrolyte, the working performance of lithium-ion batteries is obviously affected.

### SUMMARY

In view of this, an objective of the present invention is to provide a degassing device and a degassing method for liquid lithium hexafluorophosphate, to achieve an efficient and excellent degassing effect, and finally ensure that the content of hydrogen chloride in degassed liquid lithium hexafluorophosphate in the present application is less than 10 ppm, thereby reliably ensuring performance of the liquid lithium hexafluorophosphate used as a lithium-ion battery electrolyte.

Technical solutions of the present invention are as follows:
A degassing device for liquid lithium hexafluorophosphate includes a scraper evaporator, a post-degassing concentration and collection tank, a condenser, a solvent collection tank, and a vacuum pump, where
the scraper evaporator is connected to a conveying pipeline of a liquid lithium hexafluorophosphate raw material; under a heating effect and a rotating centrifugal force of the scraper evaporator, part of the liquid lithium hexafluorophosphate raw material is vaporized, the vaporized material is conveyed to the condenser, and the unvaporized liquid is conveyed to the post-degassing concentration and collection tank; and
an output end of the condenser is connected to the solvent collection tank, and a gas phase output end of the solvent collection tank is connected to the vacuum pump.

Preferably, a heat medium jacket for providing heat is arranged on an outer wall of the scraper evaporator, scrapers are arranged on an inner wall of the scraper evaporator, a stirring shaft drivable to rotate is arranged inside the scraper evaporator, and the stirring shaft is linked to the scrapers, so as to rotate the scrapers along the inner wall of the scraper evaporator.

Preferably, a stirring frame is arranged between the stirring shaft and the scraper, and a movable hinge is arranged on the stirring frame.

Preferably, a heat medium is introduced into the heat medium jacket, and heat is provided to the inside of the scraper evaporator through the heat medium; the liquid lithium hexafluorophosphate raw material located in the scraper evaporator is subjected to a centrifugal force of the rotating scraper, so that part of the liquid is vaporized.

Preferably, a temperature range of a heat medium in the heat medium jacket is from 20°C to 90°C, preferably from 30°C to 60°C.

Preferably, a rotating speed of the stirring shaft ranges from 30 rpm to 200 rpm, preferably from 50 rpm to 100 rpm; and/or the liquid lithium hexafluorophosphate raw material is fed to the scraper evaporator at an operating flow rate of 1.8 kg/h to 2.2 kg/h, preferably 1.9 kg/h to 2.1 kg/h; and/or an operating pressure range of the scraper evaporator is set at -0.8 MPaG to 0.1 MPaG, preferably -0.092 MPaG to -0.099 MPaG.

Preferably, a metering pump and a first mass flowmeter are mounted on the conveying pipeline of the liquid lithium hexafluorophosphate raw material; a second mass flowmeter is mounted on a conveying pipeline between the unvaporized liquid and the post-degassing concentration and collection tank; and an output end of the post-degassing concentration and collection tank is connected to a delivery pump, and the liquid is externally delivered to a deacidification section through the delivery pump.

Preferably, a demister and a third mass flowmeter are mounted on conveying pipelines between the vaporized material and the condenser respectively.

Preferably, the vaporized material enters a heat exchange tube of the condenser, and the vaporized material is cooled by a refrigerant outside the heat exchange tube to form liquid carbonate ester and hydrogen chloride gas, which enter the solvent collection tank together, where the liquid carbonate ester is externally delivered to a solvent refining section through a delivery pump; and the hydrogen chloride gas is externally delivered to a tail gas treatment section through the vacuum pump.

Preferably, a degassing method for liquid lithium hexafluorophosphate, which adopts the degassing device for liquid lithium hexafluorophosphate as described above, includes: vaporizing part of a liquid lithium hexafluorophosphate raw material under a heating effect and a rotating centrifugal force of the scraper evaporator (E201); conveying the vaporized material to the condenser (E202), and conveying the unvaporized liquid to the post-degassing concentration and collection tank (V301); and outputting, by the post-degassing concentration and collection tank (V301), degassed liquid lithium hexafluorophosphate, where a content of hydrogen chloride in the degassed liquid lithium hexafluorophosphate is less than 10 ppm as detected by ion chromatography.

According to the present invention, the dedicated degassing device is arranged for the liquid lithium hexafluorophosphate raw material, and specifically, the liquid lithium hexafluorophosphate raw material is degassed by the scraper evaporator. During operation, under a heating effect and a rotating centrifugal force of the scraper evaporator, part of the liquid lithium hexafluorophosphate raw material (namely liquid carbonate ester and dissolved hydrogen chloride in the liquid lithium hexafluorophosphate raw material) is vaporized to further achieve an efficient and excellent degassing effect, and it is finally ensured that the content of hydrogen chloride in the liquid lithium hexafluorophosphate degassed according to the present application is less than 10 ppm, thereby reliably ensuring performance of the liquid lithium hexafluorophosphate used as a lithium-ion battery electrolyte.

### DESCRIPTION OF THE DRAWINGS

FIG. 1 is a schematic structural diagram of a degassing device for liquid lithium hexafluorophosphate according to a specific embodiment of the present invention; and
FIG. 2 is a schematic structural diagram of a scraper evaporator E201 according to a specific embodiment of the present invention.

### DESCRIPTION OF EMBODIMENTS

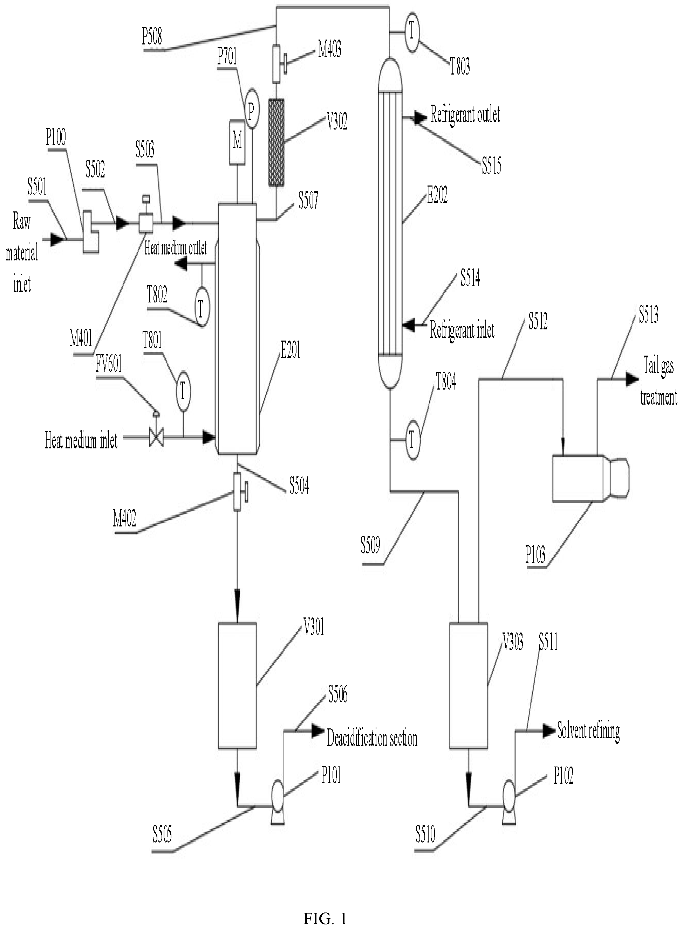

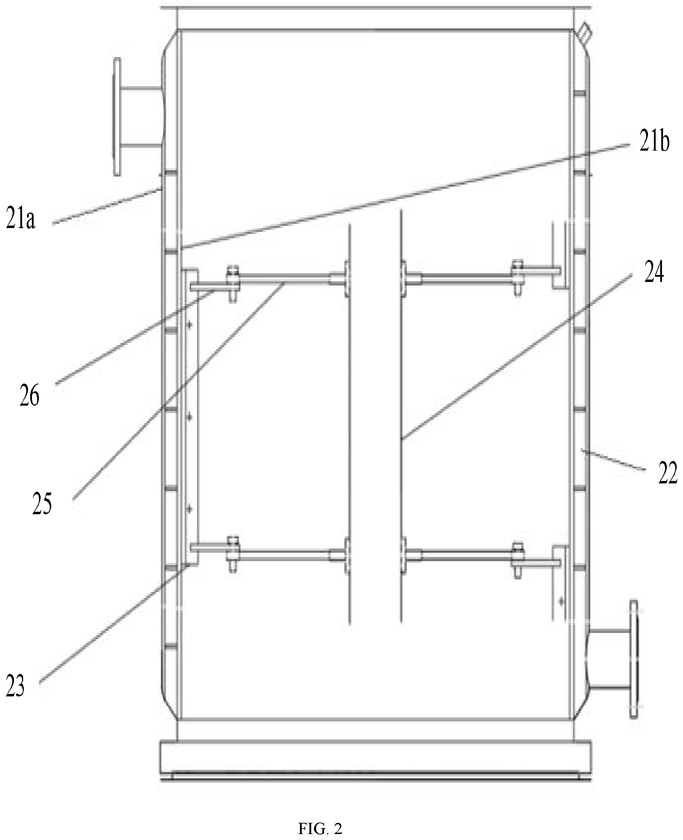

As shown in FIG. 1 and FIG. 2, this embodiment provides a degassing device for liquid lithium hexafluorophosphate. The degassing device includes a scraper evaporator E201, a post-degassing concentration and collection tank V301, a condenser E202, a solvent collection tank V303, and a vacuum pump P103, where the scraper evaporator E201 is connected to a conveying pipeline of a liquid lithium hexafluorophosphate raw material. Under a heating effect and a rotating centrifugal force of the scraper evaporator E201, part of the liquid lithium hexafluorophosphate raw material is vaporized, the vaporized material is conveyed into the condenser E202, and the unvaporized liquid is conveyed to the post-degassing concentration and collection tank V301. An output end of the condenser E202 is connected to the solvent collection tank V303, and a gas phase output end of the solvent collection tank V303 is connected to the vacuum pump P103.

Preferably, in this embodiment, a heat medium jacket 22 for providing heat is arranged on an outer wall E21a of the scraper evaporator E201, a scraper 23 is arranged on an inner wall of the scraper evaporator, a stirring shaft 24 drivable to rotate (driven to rotate by means of a stirring motor M) is arranged inside the scraper evaporator E201, and the stirring shaft 24 is linked to the scraper 23, so as to rotate the scraper 23 along the inner wall E21b of the scraper evaporator E201. Further preferably, to facilitate mounting, in this embodiment, a stirring frame 25 is arranged between the stirring shaft 24 and the scraper 23, and a movable hinge 26 is arranged on the stirring frame 25.

Preferably, in this embodiment, a heat medium is introduced into the heat medium jacket 22, and heat is provided to the inside of the scraper evaporator by mean of the heat medium; and the liquid lithium hexafluorophosphate raw material located in the scraper evaporator E201 is subjected to a centrifugal force of the rotating scraper, so that part of the liquid is vaporized. Further preferably, in this embodiment, a temperature range of the heat medium in the heat medium jacket 22 is from 20°C to 90°C, preferably from 30°C to 60°C; a rotating speed of the stirring shaft 24 ranges from 30 rpm to 200 rpm, preferably from 50 rpm to 100 rpm; and/or preferably, in this embodiment, the liquid lithium hexafluorophosphate raw material is fed to the scraper evaporator E201 at an operating flow rate of 1.8 kg/h to 2.2 kg/h, preferably 1.9 kg/h to 2.1 kg/h; and/or preferably, in this embodiment, an operating pressure range of the scraper evaporator E201 is set at -0.8 MPaG to 0.1 MPaG, preferably -0.092 MPaG to -0.099 MPaG. It should be noted that MpaG referred to in the present application means gage pressure.

Preferably, in this embodiment, a metering pump P100 and a first mass flowmeter M401 are sequentially mounted on conveying pipelines S501, S502, and S503 of the liquid lithium hexafluorophosphate raw material; a second mass flowmeter M402 is mounted on a conveying pipeline S504 between the unvaporized liquid and the post-degassing concentration and collection tank V301; and an output end of the post-degassing concentration and collection tank V301 is connected to a delivery pump P101 through a conveying pipeline S505, and the liquid is externally delivered to a deacidification section through the delivery pump P101 and a conveying pipeline S506.

Preferably, to further ensure degassing efficiency, in this embodiment, a demister V302 and a third mass flowmeter M403 are mounted on conveying pipelines S507 and S508 between the vaporized material and the condenser E202. The vaporized material enters a heat exchange tube of the condenser E202, and is cooled by a refrigerant outside the heat exchange tube to form liquid carbonate ester and hydrogen chloride gas, which enter the solvent collection tank V303 together, where the liquid carbonate ester is externally delivered to a solvent refining section through a conveying pipeline S510, a delivery pump P102, and a conveying pipeline S511; and the hydrogen chloride gas is externally delivered to a tail gas treatment section through a conveying pipeline S512, the vacuum pump P103, and a conveying pipeline S513.

Preferably, this embodiment further provides a degassing method for liquid lithium hexafluorophosphate, which adopts the degassing device for liquid lithium hexafluorophosphate as described above to implement degassing. The method includes: vaporizing part of a liquid lithium hexafluorophosphate raw material under a heating effect and a rotating centrifugal force of the scraper evaporator E201; conveying the vaporized material to the condenser E202, and conveying the unvaporized liquid to the post-degassing concentration and collection tank V301; and outputting, by the post-degassing concentration and collection tank V301, degassed liquid lithium hexafluorophosphate, where a content of hydrogen chloride in the degassed liquid lithium hexafluorophosphate is less than 10 ppm as detected by ion chromatography.

To enable a person skilled in the art to better understand the technical solutions in the present invention, the technical solutions in the embodiments of the present invention are clearly and completely described below with reference to the accompanying drawings in the embodiments of the present invention. Clearly, the described embodiments are merely some, rather than all, of the embodiments of the present invention. All other embodiments obtained by a person of ordinary skill in the art based on the embodiments of the present invention without creative efforts shall fall within the protection scope of the present invention.

Based on the above described embodiments, the present application further provides the following specific Example 1 and Example 2:

### Example 1

A synthesized liquid lithium hexafluorophosphate raw material was detected by ion chromatography, and after conversion, it was learned that the content of lithium hexafluorophosphate in the liquid lithium hexafluorophosphate raw material was 28.5%, the content of hydrogen chloride was 4.5%, and the content of hydrogen fluoride was 0.08%. It was learned by gas chromatography that the content of ethyl methyl carbonate in the liquid lithium hexafluorophosphate raw material was 99.92%.

In Example 1, the liquid lithium hexafluorophosphate raw material was degassed as follows using a degassing device provided in this example:

### Step 1: Preparation for a degassing operation

A heat medium entered a heat medium jacket 22 of a scraper evaporator E201 through a regulating valve FV601 and a pipeline on which the regulating valve was located. A first thermometer T801 showed a jacket inlet temperature, specifically 52°C; and a second thermometer T802 showed a jacket outlet temperature, specifically 48°C.

Step 2: A vacuum pump P103 was started to vacuumize the system, and a pressure gage P701 of the scraper evaporator E201 showed that an operating pressure of the scraper evaporator E201 was -0.098 MpaG.

Step 3: A stirring motor M of the scraper evaporator E201 was started and a rotating speed of a stirring shaft 24 was adjusted to 85 rpm.

Step 4: A refrigerant was introduced to a refrigerant side of a condenser E202, where the incoming temperature of the refrigerant was -15°C.

Step 5: A feed flow rate of the liquid lithium hexafluorophosphate raw material was adjusted by a metering pump P100 and a first mass flowmeter M401, with the feed operation flow rate set at 2 kg/h; after the liquid lithium hexafluorophosphate raw material entered the scraper evaporator E201, the liquid was scraped evenly by a scraper 23 to form a film on an inner wall E21b of the scraper evaporator E201, and exchanged heat with the heat medium located in the heat medium jacket 22 to obtain heat, and the hydrogen chloride and the ethyl methyl carbonate in the liquid quickly vaporized and escaped from the liquid, and rose upward to enter a demister V302 through a conveying pipeline S507, where the demister V302 functioned to capture liquid droplets in the gas and cause the liquid droplets to coalesce, without entering a gas phase pipeline, thereby reducing entrainment of the solute lithium hexafluorophosphate.

Step 6: An automatic control valve FV601 was interlocked with a third mass flowmeter M403 to adjust a gas flow rate, where the third mass flowmeter M403 showed that the mass flow rate was 0.16 kg/h (namely the mass flow rate of the vaporized material), and the liquid product flow rate (namely the mass flow rate of the unvaporized material) was displayed on a second mass flowmeter M402 as 1.84 kg/h; degassed liquid lithium hexafluorophosphate entered a post-degassing concentration and collection tank V301 through a conveying pipeline S504 and the second mass flowmeter M402, and then was externally delivered to a deacidification section through a delivery pump P101.

The liquid lithium hexafluorophosphate that was degassed (namely the degassed liquid lithium hexafluorophosphate) was detected by ion chromatography, and it was learned that in the degassed liquid lithium hexafluorophosphate obtained in the example, the content of lithium hexafluorophosphate was 30.97%, the content of hydrogen fluoride was 0.06%, and the content of hydrogen chloride was 0.0008% (less than 10 ppm).

A gas phase product (namely the vaporized material) from the scraper evaporator E201 was cooled by the condenser E202 (on which a third thermometer T803 and a fourth thermometer T804 were mounted respectively), and the fourth thermometer T804 showed a temperature of 2.5°C. Non-condensable hydrogen chloride was externally delivered to a tail gas treatment section through an outlet of the vacuum pump P103. The ethyl methyl carbonate was collected in a solvent collection tank V303, and was externally delivered through a delivery pump P102 to a solvent refining section for refining and then for reuse.

### Example 2

A synthesized liquid lithium hexafluorophosphate raw material was detected by ion chromatography, and after conversion, it was learned that the content of lithium hexafluorophosphate in the liquid lithium hexafluorophosphate raw material was 28.8%, the content of hydrogen chloride was 4.3%, and the content of hydrogen fluoride was 0.078%. It was learned by gas chromatography that the content of ethyl methyl carbonate in the liquid lithium hexafluorophosphate raw material was 99.91%.

In Example 2, the liquid lithium hexafluorophosphate raw material was degassed as follows using a degassing device provided in this example:

### Step 1: Preparation for a degassing operation

A heat medium entered a heat medium jacket 22 of a scraper evaporator E201 through a regulating valve FV601 and a pipeline on which the regulating valve was located. A first thermometer T801 showed a jacket inlet temperature, specifically 51°C; and a second thermometer T802 showed a jacket outlet temperature, specifically 46°C.

Step 2: A vacuum pump P103 was started to vacuumize the system, and a pressure gage P701 of the scraper evaporator E201 showed that an operating pressure of the scraper evaporator E201 was -0.094 MpaG.

Step 3: A stirring motor M of the scraper evaporator E201 was started and a rotating speed of a stirring shaft 24 was adjusted to 90 rpm.

Step 4: A refrigerant was introduced to a refrigerant side of a condenser E202, where the incoming temperature of the refrigerant was 5°C.

Step 5: A feed flow rate of the liquid lithium hexafluorophosphate raw material was adjusted by a metering pump P100 and a first mass flowmeter M401, with the feed operation flow rate set at 2.2 kg/h; after the liquid lithium hexafluorophosphate raw material entered the scraper evaporator E201, the liquid was scraped evenly by a scraper 23 to form a film on an inner wall E21b of the scraper evaporator E201, and exchanged heat with the heat medium located in the heat medium jacket 22 to obtain heat, and the hydrogen chloride and the ethyl methyl carbonate in the liquid quickly vaporized and escaped from the liquid, and rose upward to enter a demister V302 through a conveying pipeline S507, where the demister V302 functioned to capture liquid droplets in the gas and cause the liquid droplets to coalesce, without entering a gas phase pipeline, thereby reducing entrainment of the solute lithium hexafluorophosphate.

Step 6: An automatic control valve FV601 was interlocked with a third mass flowmeter M403 to adjust a gas flow rate, where the third mass flowmeter M403 showed that the mass flow rate was 0.17 kg/h (namely the mass flow rate of the vaporized material), and the liquid product flow rate (namely the mass flow rate of the unvaporized material) was displayed on a second mass flowmeter M402 as 1.85 kg/h; degassed liquid lithium hexafluorophosphate entered a post-degassing concentration and collection tank V301 through a conveying pipeline S504 and the second mass flowmeter M402, and then was externally delivered to a deacidification section through a delivery pump P101.

The liquid lithium hexafluorophosphate that was degassed (namely the degassed liquid lithium hexafluorophosphate) was detected by ion chromatography, and it was learned that in the degassed liquid lithium hexafluorophosphate obtained in the example, the content of lithium hexafluorophosphate was 30.97%, the content of hydrogen fluoride was 0.054%, and the content of hydrogen chloride was 0.0006% (less than 10 ppm).

A gas phase product (namely the vaporized material) from the scraper evaporator E201 was cooled by the condenser E202 (on which a third thermometer T803 and a fourth thermometer T804 were mounted respectively), and the fourth thermometer T804 showed a temperature of 2.5°C. Non-condensable hydrogen chloride was externally delivered to a tail gas treatment section through an outlet of the vacuum pump P103. The ethyl methyl carbonate was collected in a solvent collection tank V303, and was externally delivered through a delivery pump P102 to a solvent refining section for refining and then for reuse.

It would be obvious to a person skilled in the art that the present invention is not limited to the details of the foregoing exemplary embodiments, and the present invention can be implemented in other specific forms without departing from the spirit or essential features of the present invention. Therefore, the embodiments should be regarded in all respects as examples rather than as restrictive, and the scope of the present invention is defined by the appended claims rather than the above descriptions. Therefore, all changes falling within the meanings and scope of equivalent elements of the claims are included in the present invention. Any reference numeral in the claims shall not be construed as limiting the claims.

In addition, it should be understood that, although this specification has been described with reference to embodiments, not every embodiment includes only one independent technical solution, and such description of this specification is by way of clarity only. A person skilled in the art should take this specification as a whole, and the technical solutions of the embodiments may be combined as appropriate to obtain other embodiments that can be understood by a person skilled in the art.

## Claims

1. A degassing device for liquid lithium hexafluorophosphate, comprising a scraper evaporator (E201), a post-degassing concentration and collection tank (V301), a condenser (E202), a solvent collection tank (V303), and a vacuum pump (P103), wherein
the scraper evaporator (E201) is connected to a conveying pipeline of a liquid lithium hexafluorophosphate raw material; under a heating effect and a rotating centrifugal force of the scraper evaporator (E201), part of the liquid lithium hexafluorophosphate raw material is vaporized, the vaporized material is conveyed to the condenser (E202), and the unvaporized liquid is conveyed to the post-degassing concentration and collection tank (V301); and
an output end of the condenser (E202) is connected to the solvent collection tank (V303), and a gas phase output end of the solvent collection tank (V303) is connected to the vacuum pump (P103).

2. The degassing device for liquid lithium hexafluorophosphate according to claim 1, wherein a heat medium jacket (22) for providing heat is arranged on an outer wall (E21a) of the scraper evaporator (E201), a scraper (23) is arranged on an inner wall of the scraper evaporator, a stirring shaft (24) drivable to rotate is arranged inside the scraper evaporator (E201), and the stirring shaft (24) is linked to the scraper (23), so as to rotate the scraper (23) along the inner wall (E21b) of the scraper evaporator (E201).

3. The degassing device for liquid lithium hexafluorophosphate according to claim 2, wherein a stirring frame (25) is arranged between the stirring shaft (24) and the scraper (23), and a movable hinge (26) is arranged on the stirring frame (25).

4. The degassing device for liquid lithium hexafluorophosphate according to claim 2, wherein a heat medium is introduced into the heat medium jacket (22), and heat is provided to the inside of the scraper evaporator through the heat medium; the liquid lithium hexafluorophosphate raw material located in the scraper evaporator (E201) is subjected to a centrifugal force of the rotating scraper, so that part of the liquid is vaporized.

5. The degassing device for liquid lithium hexafluorophosphate according to claim 2, wherein a temperature range of a heat medium in the heat medium jacket (22) is from 20°C to 90°C, preferably from 30°C to 60°C.

6. The degassing device for liquid lithium hexafluorophosphate according to claim 2, wherein a rotating speed of the stirring shaft (24) ranges from 30 rpm to 200 rpm, preferably from 50 rpm to 100 rpm; and/or the liquid lithium hexafluorophosphate raw material is fed to the scraper evaporator (E201) at an operating flow rate of 1.8 kg/h to 2.2 kg/h, preferably 1.9 kg/h to 2.1 kg/h; and/or an operating pressure range of the scraper evaporator (E201) is set at - 0.8 MPaG to 0.1 MPaG, preferably -0.092 MPaG to -0.099 MPaG.

7. The degassing device for liquid lithium hexafluorophosphate according to claim 1, wherein a metering pump (P100) and a first mass flowmeter (M401) are mounted on the conveying pipeline of the liquid lithium hexafluorophosphate raw material; a second mass flowmeter (M402) is mounted on a conveying pipeline between the unvaporized liquid and the post-degassing concentration and collection tank (V301); and an output end of the post-degassing concentration and collection tank (V301) is connected to a delivery pump (P101), and the liquid is externally delivered to a deacidification section through the delivery pump (P101).

8. The degassing device for liquid lithium hexafluorophosphate according to claim 1, wherein a demister (V302) and a third mass flowmeter (M403) are mounted on conveying pipelines between the vaporized material and the condenser (E202) respectively.

9. The degassing device for liquid lithium hexafluorophosphate according to claim 1, wherein the vaporized material enters a heat exchange tube of the condenser (E202), and the vaporized material is cooled by a refrigerant outside the heat exchange tube to form liquid carbonate ester and hydrogen chloride gas, which enter the solvent collection tank (V303) together, wherein the liquid carbonate ester is externally delivered to a solvent refining section through a delivery pump (P102); and the hydrogen chloride gas is externally delivered to a tail gas treatment section through the vacuum pump (P103).

10. A degassing method for liquid lithium hexafluorophosphate, which adopts the degassing device for liquid lithium hexafluorophosphate according to any one of claims 1 to 9, comprising: vaporizing part of a liquid lithium hexafluorophosphate raw material under a heating effect and a rotating centrifugal force of the scraper evaporator (E201); conveying the vaporized material to the condenser (E202), and conveying the unvaporized liquid to the post-degassing concentration and collection tank (V301); and outputting, by the post-degassing concentration and collection tank (V301), degassed liquid lithium hexafluorophosphate, wherein a content of hydrogen chloride in the degassed liquid lithium hexafluorophosphate is less than 10 ppm as detected by ion chromatography.
